# EUROPÄISCHE PATENTSCHRIFT

(11) **EP 0 802 609 B1**
(45) Veröffentlichungstag und Bekanntmachung des Hinweises auf die Patenterteilung: **06.02.2002**
(21) Anmeldenummer: 97810237.4
(22) Anmeldetag: 16.04.1997
(51) Int. Cl.: H02K 3/51, H02K 15/00, B65H 81/02

(54) **Bandage für Wickelköpfe von Läufern elektrischer Maschinen und Verfahren zur Herstellung von Bandagen für Wickelköpfe**
Bandage for the winding heads of electrical machine rotors and process to manufacture bandages for the winding heads
Bondage des têtes de bobines de rotor de machines électriques et procédé de fabrication des bondages de têtes de bobines

(30) Priorität: 18.04.1996 DE 19615189; 30.08.1996 DE 19635295
(43) Veröffentlichungstag der Anmeldung: 22.10.1997
(73) Patentinhaber: ABB RESEARCH LTD., 8050 Zürich (CH)
(72) Erfinder: Heil, Werner, 5242 Lupfig (CH); Mallick, Vishal, Dr., 5413 Birmenstorf (CH); Meynard, François, Dr., 1256 Toinex (CH); Parfrey, Karl, 5408 Ennebaden (CH); Prenner, Herbert, Dr., 5413 Birmenstorf (CH)
(74) Vertreter: ABB Patent Attorneys

(56) Entgegenhaltungen:
- EP-A- 0 463 611
- CH-A- 404 193
- DE-A- 1 488 018
- US-A- 2 949 555
- US-A- 4 128 777

## Beschreibung

### Technisches Gebiet

Die Erfindung betrifft eine Bandage für Wickelköpfe von Läufern elektrischer Maschinen nach dem Oberbegriff des ersten Anspruches.
Sie betrifft ebenfalls ein Verfahren zur Herstellung einer Bandage nach dem Oberbegriff des unabhängigen Verfahrensanspruches.

### Stand der Technik

Derartige Bandagen für Wickelköpfe von Läufern elektrischer Maschinen sind bekannt aus "Herstellung der Wicklung elektrischer Maschinen", Herausgegeben von H. Sequenz, Springer Verlag, S. 236f. Dort werden die Wickelungen von Wickelköpfen der Läufer elektrischer Maschinen durch Bandagen aus Stahldraht oder in Harz getränkten Glasfasern gehalten. Eine weitere, dort nicht beschriebene Halterung und Abstützung von Wickelköpfen sind Kappenringe.
Die Drahtbandagen werden aus möglichst nur einer Lage dicht nebeneinander liegender Drahtwindungen gebildet. Zwischen Bandage und Wickelung wird eine Isolierschicht gelegt. Als Bandagendrahtmaterial dient Bronze oder unmagnetischer Stahl.
Die duroplastischen Glasfaserbandagen bestehen aus mit Harz vorimprägnierten Glasfaserbändem, die in mehreren Lagen um den Wickelkopf gewickelt werden. Durch duroplastische Glasbandagen ergeben sich konstruktive und fertigungstechnische Vorteile. Im Handel sind verschiedenste Glasfserbänder mit duroplastischer Matrix erhältlich, beispielsweise Glasfasern die mit einem lösungsmittelfreien Harz imprägniert sind. Beim Bandagieren wird mit einem möglichst hohen Vorspannung gearbeitet, wobei die maximal anwendbare Vorspannung von der Zugfestigkeit des Glasfaserbandes abhängig ist. Das duroplastische Bandagenmaterial wird durch eine Wärmequelle so stark erhitzt, dass das Harz flüssig wird. Aeussere Lagen dringen durch die Vorspannung schon während dem Bandagieren in die unteren Lagen ein, wodurch ein gewisser Anteil der Vorspannung verloren geht, bevor das Harz ausgehärtet ist. Die Vorspannung bei der Verarbeitung muss so aufgebracht werden, dass die verbleibende Vorspannung im ausgehärteten Material ausreicht, um die zentrifugalen Kräfte beim Betrieb in den Wickelköpfen auszugleichen. Die Vorteile von Glasbandagen gegenüber Drahtbandagen sind unter anderem die Verbilligung des Endproduktes, spezielle Isolierschichten entfallen, die spezifische Elastizität ist höher, geringere Beanspruchung durch die Fliehkraft infolge geringerem Gewicht, usw. (Siehe DE-A-1 488 018 und US-A-4 128 777).

Als Auswahlkriterium für die Anwendung von Glasbandagen oder Stahlbandagen für Wickelköpfe ist jedoch die Dicke der benötigten Bandage entscheidend. Ab einer Dicke der duroplastischen Glasbandage von über 8 mm haben weiter aufgebrachte Windungen von duroplastischem Fasermaterial keinen Effekt mehr auf die Festigkeit der Glasbandage. Deshalb werden bei grösserer benötigter Festigkeit die Glasbandagen durch Stahlbandagen ersetzt.

Ein Verfahren zur Herstellung einer gattungsgemäßen Bandage entsprechend dem Oberbegriff des Anspruchs 4 ist aus EP-A-0 463 611 bekannt.

### Darstellung der Erfindung

Der Erfindung liegt die Aufgabe zugrunde, bei einer Bandage für Wickelköpfe von Läufern elektrischer Maschinen der eingangs genannten Art Bandagen mit höherer Vorspannung und damit höherer Festigkeit bei möglichst geringer Dicke zu erzeugen.

Erfindungsgemäss wird dies durch die Merkmale des ersten Anspruches erreicht.

Kern der Erfindung ist es also, dass die Kunststoffmatrix der Faserbänder aus einem thermoplastischen Kunststoff besteht.

Die Vorteile der Erfindung sind unter anderem darin zu sehen, dass beim Aufbringen der thermoplastischen Faserbänder keine Vorspannungsverluste durch Relaxation entstehen. Dadurch kann pro Windung der thermoplastischen Faserbänder mehr Vorspannung aufgebracht werden, wodurch weniger Lagen von Faserbändern zur Erzielung einer gewissen Vorspannung und Festigkeit benötigt werden. Dies bedeutet, dass die Dicke der thermoplastischen Bandagen gegenüber duroplastischen Bandagen reduziert werden kann, wodurch die beim Betrieb des Läufers auftretende Wärme besser abgeführt werden kann. Weiter können bisher verwendete Stahlbandagen aufgrund der geringen benötigten Dicke der thermoplastischen Bandagen durch die thermoplastischen Bandagen ersetzt werden. Ein weiterer Vorteil ist die geringe Zeit die zur Herstellung einer thermoplastischen Bandage benötigt wird und die daraus resultierenden geringen Herstellungskosten solcher Bandagen.

Weitere vorteilhafte Ausgestaltungen der Erfindung ergeben sich aus den Unteransprüchen.

Erfindungsgemäß wird auch ein Verfahren zur Herstellung einer gattungsgemässen Bandage durch die Merkmale des Anspruchs 4 angegeben.

### Kurze Beschreibung der Zeichnung

In der Zeichnung ist ein Ausführungsbeispiel der Erfindung schematisch dargestellt.
Es zeigen:
- Fig. 1: eine Seitenansicht einer erfindungsgemässen Vorrichtung zur Anbringung von Bandagen auf einen Wickelkopf;
- Fig. 2: einen Teilquerschnitt durch die Vorrichtung nach Fig.1 entlang der Ebene II-II;
- Fig. 3: das Detail III aus Fig. 2;
- Fig. 4: eine Vorspannungsverteilungskurve;
- Fig. 5: eine weitere erfindungsgemässe Vorrichtung zur Anbringung von Bandagen auf einen Wickelkopf ohne Pressrolle.

Es sind nur die für das Verständnis der Erfindung wesentlichen Elemente gezeigt.

### Weg zur Ausführung der Erfindung

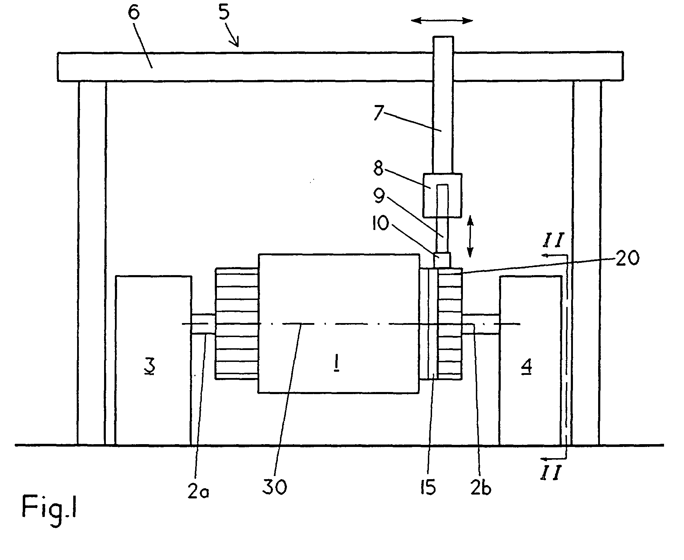

In Fig. 1 ist ein Läufer 1 einer elektrischen Maschine mit seinen Wellenenden 2a, 2b auf zwei Lager-Blöcken 3, 4 drehbar gelagert. Im Lager-Block 3 ist eine nicht dargestellte Drehvorrichtung integriert, mittels derer der Läufer 1 um seine Läuferdrehachse 30 gedreht werden kann. Oberhalb des Läufers 1 ist ein parallel zur Läuferdrehachse 30 verlaufender Portalrahmen 5 angeordnet. Am Portalrahmen 5 ist ein Trägerarm 7 im wesentlichen vertikal angeordnet, wobei der Trägerarm 7 über den Querträger 6 des Portalrahmens 5 horizontal verschoben werden kann. Am unteren, dem Läufer 1 gegenüberliegenden Ende des Trägerarmes 7, ist ein Druckzylinder 8 angeordnet. Mittels des Druckzylinders 8 und einer Halterung 9 kann ein Kopfstück 10 vertikal bewegt und mit einer einstellbaren Kraft gegen einen Wickelkopf 20 des Läufers 1 gedrückt werden. Das Kopfstück 10 dient dabei zur Anbringung eines thermoplastischen Faserverbundwerkstoff-Bandes 15 auf den Wickelkopf 20.

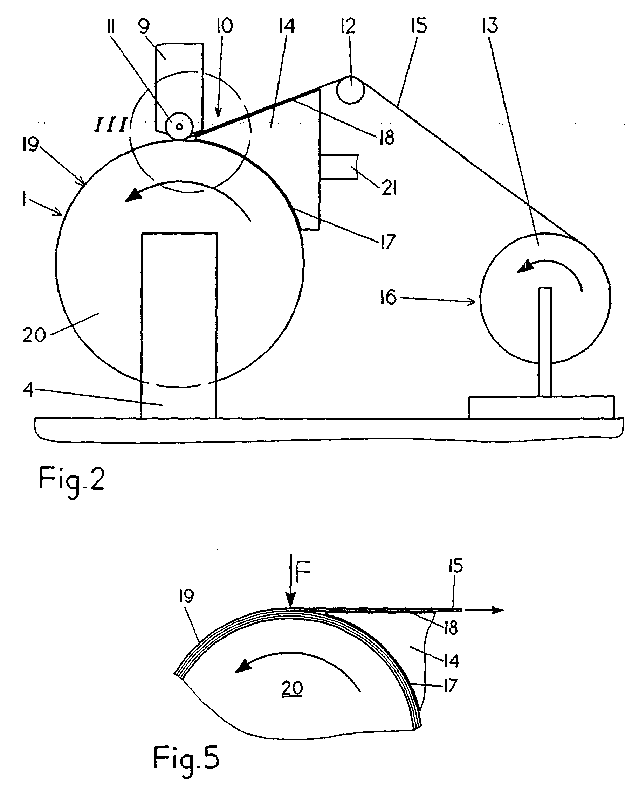

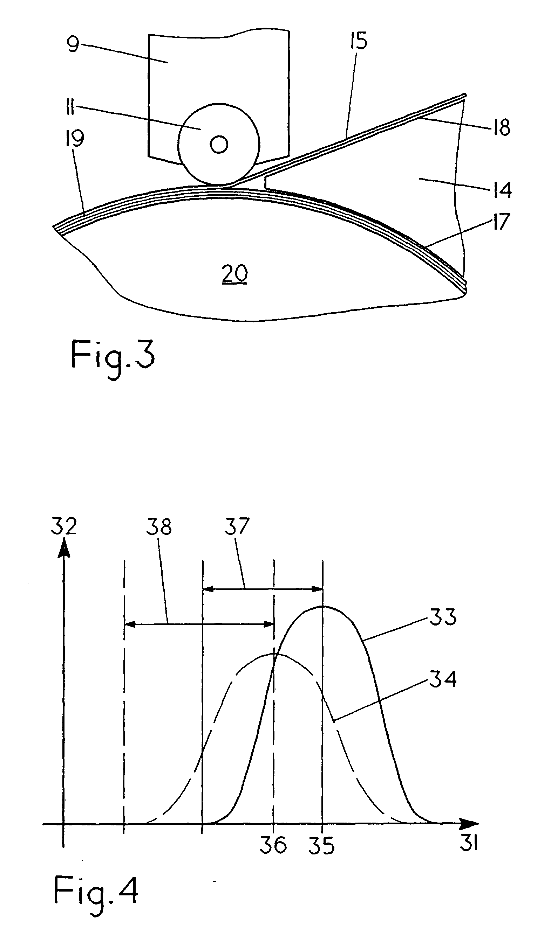

Nach Fig. 2 und Fig. 3 umfasst das Kopfstück 10 eine Pressrolle 11, eine Führungsrolle 12 und eine Heizvorrichtung 14. Die Elemente 11, 12, 14 des Kopfstückes 10 sind über nicht dargestellte Halterungen miteinander verbunden. Das thermoplastische Faserband 15 wird über eine Abspulvorrichtung 16 von einer Bandagenmaterialrolle 13 abgespult. Das thermoplastische Faserband 15 wird danach über die Führungsrolle 12 zur Heizvorrichtung 14 geleitet. Dort wird das thermoplastische Faserband 15 mittels eines Heizelementes 18 zumindest auf der der Heizvorrichtung 14 zugewandten Oberfläche auf mindestens den Schmelzpunkt der thermoplastischen Matrix des thermoplastischen Faserbandes 15 erhitzt. Durch die Pressrolle 11 wird das thermoplastische Faserband 15 auf den Wicklungskopf 20 gedrückt und abgekühlt, so dass es auf dem Wicklungskopf 20 festklebt. Die Drehgeschwindigkeit der Abspulvorrichtung 16 ist dabei geringer als diejenige des Läufers 1, wodurch durch die Abspulvorrichtung 16 eine einstellbare Zugkraft auf das thermoplastische Faserband 15 ausgeübt wird. Das Faserband 15 wird somit unter einer gewissen Vorspannung auf den Wickelkopf aufgebracht. Ist eine erste Bahn des thermoplastischen Faserbandes 15 auf den Wicklungskopf 20 aufgebracht, wird die dem Wickelkopf abgewandte äussere Oberfläche des sich auf dem Wickelkopf befindenden thermoplastischen Faserbandes 15 durch ein Heizelement 17 der Heizvorrichtung 14 ebenfalls auf mindestens den Schmelzpunkt der thermoplastischen Matrix erhitzt. Dadurch sind die beiden einander zugewandten Oberflächen des thermoplastischen Faserbandes 15 angeschmolzen und bei der Pressrolle 11 ensteht eine optimale Verschweissung. Durch die Aufbringung des thermoplastischen Faserbandes 15 entsteht somit eine zumindest einlagige Bandage 19 welche eine entsprechende Vorspannung aufweist. Die Heizelemente 17, 18 werden beispielsweise über ein Luftzuführung mit heisser Luft versorgt.

Das Bandagenmaterial besteht erfindungsgemäss aus thermoplastischen Faserverbundwerkstoff-Bändern. Diese Bänder bestehen aus einer thermoplastischen Kunststoff-Matrix mit darin eingebetteten Fasern, wobei der Fasergehalt bis zu über 60% betragen kann. Als thermoplastische Matrix können beliebige thermoplastische Kunststoffe, die den entsprechenden Anforderungen genügen, verwendet werden, vorzugsweise aromatische Kunststoffe, insbesondere Polyetheretherketon oder Polyetherimid.
Als Fasern können beliebige Fasermaterialien verwendet werden, die eine entsprechend gewünschte Zugkraft aufweisen, vorzugsweise Kohlefasern oder Glasfasern.

**Tabelle 1**

| Bsp. | Material | Fasertyp | Matrix | Dichte (g/cm3) | Zugfestigkeit (MPa) | Elastizitätsmodul (GPa) |
|---|---|---|---|---|---|---|
| a | QLG4068 | Glas | PPS | 1.65 | 1110 | 44 |
| b | QLC4160 | Kohle | PPS | 1.5 | 1837 | 114 |
| c | QLC4064 | Kohle | PPS | 1.5 | 1950 | 121 |
| d | PEI-S2 | Glas | PEI | 1.6 | 1170 | 55 |
| e | APC2-S2 | Glas | PEEK | 1.6 | 1170 | 55 |
| f | APC2-AS4 | Kohle | PEEK | 1 .5 | 2070 | 140 |
| g | Polyglas | Glas | Polyester | 1.6 | 800-1200 | 40-60 |

In der Tabelle 1 sind die Materialeigenschaften einiger ausgewählter Beispiele thermoplastischer Faserverbundwerkstoff-Bänder dargestellt . Die in der Tabelle dargestellten Bänder bestehen aus Glas- oder Kohlefasern und einer Matrix aus Polyphenylensulfid (PPS), Polyetherimid (PEI) oder Polyetheretherketon (PEEK). Die Bänder mit den Bezeichnungen a, b, c werden von der Firma Quadrax, die Bänder mit den Bezeichnungen d, e, f von der Firma ICI Fiberite hergestellt. Als Vergleichsbeispiel dient Beispiel g mit einer duroplastischen Matrix, welches von der Firma lsola von Roll hergestellt wird.

Die maximale Gebrauchstemperatur der Bänder aus Beispiel a, b, c, d und g beträgt etwa 200°C, diejenige der Beispiele e und f beträgt ungefähr 240°C. PEEK wird üblicherweise bei etwa 400°C und PPS bei etwa 340°C verarbeitet.

In Fig. 4 ist eine bei der Verarbeitung von Faserbändern aufgebrachte Vorspannung 31 gegen eine Verteilung der verbleibenden Vorspannung 32 aufgetragen. Für eine Verteilungskurve 33 eines thermoplastischen Faserbandes 15 liegt ein Mittelwert 35 höher als derjenige Mittelwert 36 für eine Verteilungskurve 34 eines duroplastischen Faserbandes. Eine Sicherheitsbreite 37 des thermoplastische Faserband 15 ist kleiner als eine Sicherheitsbreite 38 des duroplastischen Bandes, d. h. die Varianz der Kurve 33 des thermoplastische Faserband ist kleiner als diejenige der Kurve 34. Dies ist dadurch zu erklären, dass während der Verarbeitung der thermoplastische Faserbänder nur sehr geringe Vorspannungsverluste durch Relaxationen entstehen. Experimente haben gezeigt, dass die verbleibende Vorspannung für thermoplastische Bandagen mindestens zwischen 70 - 100% der ursprünglichen Vorspannung beträgt. Dadurch werden zur Erzeugung einer Bandage mit einer gewissen Vorspannung weniger Windungen des thermoplastischen Faserbandes im Vergleich mit duroplastischem Faserband benötigt, wie dies aus der nachfolgenden Tabelle 2 hervorgeht.

**Tabelle 2**

| Fasertyp | Glasfasern | Kohlefasern |
|---|---|---|
| Anzahl Windungen thermoplastisches Faserband im Verhältnis zu Anzahl Windungen duroplastisches Faserbandes mit Glasfasern | < 0.7 | < 0.4 |

Aus der Tabelle 2 wird ersichtlich, das beispielsweise beim Ersatz von duroplastischen Bandagen mit Glasfasern durch thermoplastische Bandagen mit Kohlefasern die Dicke der Bandage um mehr als den Faktor 2.5 reduziert werden kann. Dadurch können bisher verwendete Stahlbandagen durch thermoplastische Bandagen ersetzt werden.

Nach Fig. 5 kann das thermoplastische Faserband 15 insbesondere bei kleineren Wickelköpfen 20, d.h. bei Wickelköpfen mit kleinen Radien, mittels einer Verbindungskraft F ohne eine Pressrolle 11 aufgebracht werden. Die Verbindungskraft F ist dabei proportional zur auf das Band 15 aufgebrachten Spannung und umgekehrt proportional zum Radius des Wickelkopfes 20. Dabei ist zu beachten, dass der Radius des Wickelkopfes durch die Gegebenheiten der elektrischen Maschine vorausbestimmt ist und dass die maximal auf das Band 15 aufbringbare Spannung durch die Zugfestigkeiten gemäss Tabelle 1 bestimmt ist. Ueberall wo der Radius des Wickelkopfes genügend klein und die aufbringbare Spannung genügend gross ist, kann somit auf die Pressrolle gemäss Fig. 2 und 3 verzichtet werden. Dadurch weist der Auftragungsprozess weniger Prozessgrössen auf und wird damit stark vereinfacht, wodurch auch Investitionskosten gespart werden. Ein weiterer Vorteil ist, dass das Verfahren weniger abhängig von der Geometrie und Topologie der Leiterstäbe des Wickelkopfes ist.

Auch Kappenringe von Generatoren und Motoren, die zur Halterung und Abstützung des Wickelkopfes dienen, können durch Bandagen aus thermoplastischen Faserbändern ersetzt werden. Dies wird durch die hervorragenden mechanischen Eigenschaften der thermoplastischen Faserbänder ermöglicht, sowie durch die geringe Dicke der daraus erzeugten Bandagen.

Selbstverständlich ist die Erfindung nicht auf das gezeigte und beschriebene Ausführungsbeispiel beschränkt. Mittels der thermoplastischen Faserbänder können die Bandagen auch aus einzelnen Ringen aufgebaut werden. Dies hat den Vorteil, dass die im Läufer entstehende Wärme über die Zwischenräume zwischen den Ringen abgeführt werden kann.

### Bezugszeichenliste

- 1: Läufer
- 2a,2b: Wellenende
- 3: Lager-Block mit Drehvorrichtung
- 4: Lager-Block
- 5: Portalrahmen
- 6: Querträger
- 7: Trägerarm
- 8: Druckzylinder
- 9: Halterung
- 10: Kopfstück
- 11: Pressrolle
- 12: Führungsrolle
- 13: Bandagenmaterialrolle
- 14: Heizvorrichtung
- 15: thermoplastisches Faserverbundwerkstoff-Band
- 16: Abspulvorrichtung / Vorspannvorrichtung
- 17: Heizelement
- 18: Heizelement
- 19: Bandage
- 20: Wicklungskopf
- 21: Luftzuführung
- 30: Läuferdrehachse
- 31: Vorspannung
- 32: Verteilung der verbleibenden Vorspannung
- 33: thermoplastische Faserbänder
- 34: duroplastische Faserbänder
- 35: Mittelwert thermoplastische Faserbänder
- 36: Mittelwert duroplastische Faserbänder
- 37: Sicherheitsbreite thermoplastische Faserbänder
- 38: Sicherheitsbreite duroplastische Faserbänder
- F: Kraft

## Patentansprüche

1. Bandage (19) für Wickelköpfe (20) von Läufern (1) elektrischer Maschinen, im wesentlichen bestehend aus einer Kunststoffmatrix mit darin eingebettetem Fasermaterial, wobei die Bandage (19) durch Aufwickeln eines Faserbandes (15) auf den Wickelkopf (20) gebildet wird,
**dadurch gekennzeichnet,**
**dass** die Kunststoffmatrix aus einem thermoplastischen Kunststoff besteht.

2. Bandage nach Anspruch 1,
**dadurch gekennzeichnet,**
**dass** das Fasermaterial aus Glasfasern und / oder Kohlefaser besteht.

3. Bandage nach Anspruch 1,
**dadurch gekennzeichnet,**
**dass** der thermoplastische Kunststoff ein aromatischer thermoplastischer Kunststoff ist.

4. Verfahren zur Herstellung von Bandagen (19) für Wickelköpfe (20) von Läufern (1) elektrischer Maschinen, wobei mindestens eine Schicht von Bändern (15) aus einem Verbund von Fasern und Kunststoffmatrix mit einer Vorspannung auf den Wickelkopf (20) aufgebracht wird,
**dadurch gekennzeichnet,**
**dass** ein Band (15) aus einer thermoplastischen Kunststoffmatrix mit darin eingelegten Fasern über eine Abspulvorrichtung (16) abgespult wird, dass das Band (15) über ein Kopfstück (10), welches mindestens eine Heizvorrichtung (14) umfasst, auf den Wickelkopf (20) aufgebracht wird, wobei das thermoplastische Faserband (15) durch die Heizvorrichtung (14) zumindest an der dem Wickelkopf (20) zugewandten Seite über den Schmelzpunkt der Kunststoffmatrix erwärmt wird und danach das Band (15) auf den Wikkelkopf (20) aufgetragen und unter den Schmelzpunkt der Kunststoff-matrix abgekühlt wird.

5. Verfahren nach Anspruch 4,
**dadurch gekennzeichnet,**
**dass** das Kopfstück (10) mindestens eine Heizvorrichtung (14) und eine Pressrolle (11) umfasst und das Band (15) mittels der Pressrolle (11) auf den Wickelkopf (20) gepresst wird.

6. Verfahren nach Anspruch 5,
**dadurch gekennzeichnet,**
**dass** mittels der Pressrolle (11) das auf den Wickelkopf (20) gepresste Band (15) unter den Schmelzpunkt der Kunststoffmatrix abgekühlt wird.

7. Verfahren nach Anspruch 4 oder 5,
**dadurch gekennzeichnet,**
**dass** das auf den Wickelkopf (20) aufgebrachte thermoplastische Faserband (15) durch die Heizvorrichtung (14) zumindest an der dem Wickelkopf (20) abgewandten Seite über den Schmelzpunkt der Kunststoffmatrix erwärmt wird.

## Claims

1. Binding (19) for end windings (20) of rotors (1) of electrical machines, essentially comprising a plastic matrix with fibre material embedded in it, with the binding (19) being formed by winding of a fibre strip (15) on the end winding (20),
**characterized**
**in that** the plastic matrix is composed of a thermoplastic.

2. Binding according to Claim 1,
**characterized**
**in that** the fibre material is composed of glass fibres and/or carbon fibre.

3. Binding according to Claim 1,
**characterized**
**in that** the thermoplastic is an aromatic thermoplastic.

4. Method for producing bindings (19) for end windings (20) of rotors (1) of electrical machines, with at least one layer of strips (15) composed of a composite of fibres and a plastic matrix being applied, prestressed, to the end winding (20),
**characterized**
**in that** a strip (15) of a thermoplastic matrix with fibres inserted in it is unwound via an unwinding apparatus (16), in that the strip (15) is applied via a headpiece (10), which has at least one heating apparatus (14), to the end winding (20), with the thermoplastic fibre strip (15) being heated by the heating apparatus (14) above the melting point of the plastic matrix at least on the side facing the end winding (20), and the strip (15) then being applied to the end winding (20) and being cooled below the melting point of the plastic matrix.

5. Method according to Claim 4,
**characterized**
**in that** the headpiece (10) has at least one heating apparatus (14) and one pressing roller (11), and the strip (15) is pressed onto the end winding (20) by means of the pressing roller (11).

6. Method according to Claim 5,
**characterized**
**in that** the strip (15) which is pressed onto the end winding (20) is cooled below the melting point of the plastic matrix by means of the pressing roller (11).

7. Method according to Claim 4 or 5,
**characterized**
**in that** the thermoplastic fibre strip (15) which is applied to the end winding (20) is heated by the heating apparatus (14) above the melting point of the plastic matrix, at least on the side facing away from the end winding (20).

## Revendications

1. Frette (19) pour des têtes de bobines (20) de rotors (1) de machines électriques, se composant essentiellement d'une matrice de plastique dans laquelle est noyée une matière fibreuse, dans laquelle la frette (19) est formée par enroulement d'une bande fibreuse (15) sur la tête de bobine (20), **caractérisée en ce que** la matrice plastique est constituée d'une matière plastique thermoplastique.

2. Frette suivant la revendication 1, **caractérisée en ce que** la matière fibreuse se compose de fibres de verre et/ou de fibres de carbone.

3. Frette suivant la revendication 1, **caractérisée en ce que** la matière plastique thermoplastique est une matière plastique thermoplastique aromatique.

4. Procédé pour la fabrication de frettes (19) pour des têtes de bobines (20) de rotors (1) de machines électriques, dans lequel on applique au moins une couche de bandes (15) en un composite de fibres et de matrice plastique avec une précontrainte sur la tête de bobine (20), **caractérisé en ce que** l'on déroule par une dérouleuse (16) une bande (15) constituée d'une matrice plastique thermoplastique dans laquelle des fibres sont incorporées, **en ce que** l'on applique la bande (15) sur la tête de bobine (20) par une pièce de tête (10), qui comprend au moins un dispositif de chauffage (14), la bande de fibres thermoplastique (15) étant chauffée par le dispositif de chauffage (14), au moins sur la face tournée vers la tête de bobine (20), au moins au-delà du point de fusion de la matrice plastique, et **en ce que** l'on applique ensuite la bande (15) sur la tête de bobine (20) et on la refroidit en dessous du point de fusion de la matrice plastique.

5. Procédé suivant la revendication 4, **caractérisé en ce que** la pièce de tête (10) comprend au moins un dispositif de chauffage (14) et un rouleau presseur (11), et **en ce que** l'on presse la bande (15) sur la tête de bobine (20) au moyen du rouleau presseur (11).

6. Procédé suivant la revendication 5, **caractérisé en ce que** l'on refroidit la bande (15) pressée sur la tête de bobine (20) en dessous du point de fusion de la matrice plastique, au moyen du rouleau presseur (11).

7. Procédé suivant la revendication 4 ou 5, **caractérisé en ce que** l'on chauffe la bande de fibres thermoplastique (15) appliquée sur la tête de bobine (20) au moyen du dispositif de chauffage (14), au moins sur la face située à l'opposé de la tête de bobine (20), au-delà du point de fusion de la matrice plastique.
